# EUROPEAN PATENT APPLICATION

(11) **EP 2 119 673 A1**
(43) Date of publication of application: **18.11.2009**
(21) Application number: 08718474.3
(22) Date of filing: 20.02.2008
(51) Int. Cl.: C01F 17/00, B01J 23/10

(54) **CE-N-O SYSTEM DERIVED FROM DOPING OF CERIUM OXIDE WITH NITROGEN HAVING GENERAL FORMULA CEO2-X-YNX**

(30) Priority: 23.02.2007 ES 200700482
(71) Applicant: Consejo Superior De Investigaciones Científicases, 28006 Madrid (ES)
(72) Inventor: FUERTES MIQUEL, Amparo, E-08193 Bellaterra (ES); JORGE SOBRIDO, Ana Belén, E-08193 Bellaterra (ES)
(74) Representative: Pons Ariño, Angel
(86) International application number: PCT/ES2008/070027
(87) International publication number: WO 2008/102045

(57) **Abstract**

Ce-N-O system derived from doping of cerium oxide with nitrogen with general formula CeO_{2-x-y}Nₓ, with the same structure as undoped CeO₂, and which can have 5 similar uses of great technological and strategic relevance, namely as a solid electrolyte and as a catalyser. The presence of cerium 3+ means that luminescent properties may also be present. This compound is prepared by means of a solid-gas reaction using cerium dioxide and ammonia as starting products. The cerium dioxide is placed in a tubular furnace and heated to temperatures over 10 400°C and ammonium atmosphere.

## Description

### TECHNICAL FIELD OF THE INVENTION

The object of the invention is a product that contains cerium, oxygen and nitrogen, with a structure and applications analogous to those of ceria (as a catalyst or a solid electrolyte) or related to its optical properties, as well as the preparation thereof. Its production pertains to the chemical sector, specifically the preparation of inorganic materials, and its applications pertain to the energy (solid electrolyte), the transport (catalyst) and the electronic and optical (optical properties) fields.

### STATE OF THE ART

Nitrogen doping is an important method used to modify the properties of oxides, for example, reduce the energy in the gap between ultraviolet and visible light in photocatalyst TiO₂ (Asahi, R.; Morikawa, T; Ohwaki, T; Aoki, K; Taga, Y. Science 2001, 293, 269). Other oxynitrides with important applications are photocatalyst TaON (Hitoki, G.; Takata, T.; Kondo, J.N.; Hara, M.; Kobayashi, H.; Domen, K. Chem. Comm. 2002, 1698) and yellow-red pigments of the type CaTaO₂N-LaTaON₂ (Jansen, M.; Letschert, H.P. Nature, 2000, 404, 980). Ceria (CeO₂) has important technological applications as a solid electrolyte in fuel batteries or as an oxygen-reserve component in three-way catalysts used in automobiles (see, for example, Yao, H.C.; Yu Yao, Y.F. Jour. Catálisis, 86, 1984, 254, and Inaba, H., Tagawa, H. Solid State Ionics, 83, 1996, 1).

The nitrogen doping of ceria has not been published or patented before. The only binary nitrited cerium compound known is CeN, and the only ternary phases known in the Ce-N-O system are CeN₁₋ₓOₓ and Ce₂N₂O. Solid oxygen solutions in CeN are known, with a sodium chloride structure and the formula CeN₁₋ₓOₓ, where x≤ 0.5 (Brown, R.C.; Clark, N.J. J. Inorg. Nucl. Chem. 36, 1974, 1777). These solid solutions are prepared by the reaction of CeN and CeO₂ mixtures under vacuum at 1,500°C. Likewise, the preparation of a compound with the formula Ce₂N₂O and a structure analogous to that of Ce₂O₃ has been published (Barker, M.G.; Alexander, I.C. J. Chem. Soc. Dalton 1974, 2166). The synthesis of oxynitride Ce₂N₂O is performed from the reaction of Li₂CeN₂ and Li₂O or CeN and CeO₂, under vacuum at 1,000°C.

The conducting properties of oxygen or the catalytic properties of ceria are related to its fluorite structure and its capacity to absorb or desorb oxygen, which is associated with the partial reversible reduction of Ce⁴⁺ to Ce³⁺ and the creation of oxygen vacancies. The partial substitution of oxygen with nitrogen in ceria necessarily creates anionic vacancies to maintain cerium's oxidation state 4+, and if, additionally, there is a partial reduction of Ce⁴⁺ to Ce³⁺, additional oxygen vacancies will be created, such that the nitrided ceria must be formulated as CeO_{2-x-y}Nₓ. The introduction of nitrogen into the fluorite structure of ceria necessarily modifies its redox properties and the system of oxygen vacancies, which will affect its behaviour in the two most important applications thereof, as a catalyst or as an ionic conductor. On the other hand, the presence of Ce³⁺ may lead to applications of the new compound as a luminescent material.

### DESCRIPTION OF THE INVENTION

### BRIEF DESCRIPTION OF THE INVENTION

The object of this invention is to prepare a new product that contains cerium, oxygen and nitrogen. It is the first known product with this composition that exhibits the structure of ceria (CeO₂), and has the formula CeO_{2-x-y}Nₓ, where x and y are such that: 0<x<0.5 and 0<y<0.5. This product is obtained by the thermal treatment of cerium dioxide in an ammonia atmosphere, ammonia being a nitriding, reducing gas, and the nitrogen doping and the proportion of trivalent cerium may be controlled by means of the maximum temperature used during the process. The advantages of this invention lie in the fact that it is a product doped only with nitrogen that did not previously exist, with the same structure as undoped ceria, CeO₂, and which may have similar highly relevant technological and strategic applications, i.e. as a solid electrolyte and as a catalyst. Due to the presence of cerium 3+, it may also have luminescent properties.

### DETAILED DESCRIPTION OF THE INVENTION

The object of this invention is a new product with the composition CeO_{2-x-y}Nₓ, where x and y are such that: 0<x<0.5 and 0<y<0.5. Said compound is additionally **characterised in that**, following the preparation thereof, it has a fluorite-type crystalline structure (CaF₂), where cerium occupies the Ca-type crystallographic positions, and nitrogen and oxygen occupy the F-type positions. The new compound is isostructural with respect to undoped ceria (CeO₂). In accordance with the invention, this compound is prepared by means of a solid-gas reaction, using cerium dioxide and gaseous ammonia as the starting products. Cerium dioxide is introduced into a tubular oven and heated to temperatures above 400°C in an ammonia atmosphere. The reaction duration is at least two hours. The interest of the compound of the invention lies in that the introduction of nitrogen into the fluorite structure of ceria necessarily modifies its redox properties and the system of oxygen vacancies, which will affect its behaviour in the two most important applications thereof, as a catalyst and as an ionic conductor. On the other hand, the presence of Ce³⁺ may lead to applications of the new compound as a luminescent material.

### BRIEF DESCRIPTION OF THE CONTENT OF THE FIGURES

Figure 1 represents the crystalline structure of the product of the invention.

Figure 2 represents the X-ray diffraction diagram of the product of the invention.

### EMBODIMENT EXAMPLE OF THE INVENTION

### Preparation of the product

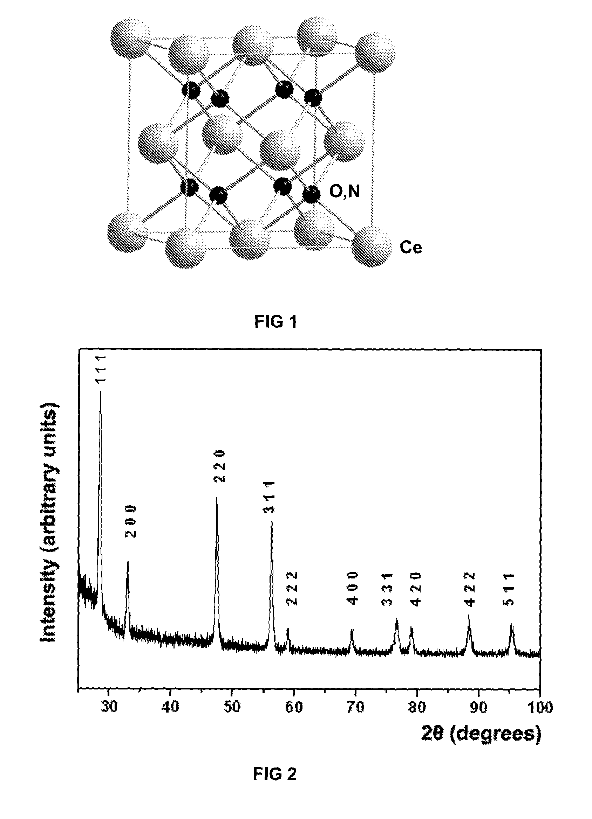

2 g of ceria (CeO₂) are introduced into the reaction oven. Said oven is connected to an ammonia gas inlet, which makes it possible to perform the entire reaction process under a flow of said gas. The reactor is heated at a rate of 200°C per hour to a temperature of 700°C, which is maintained for 7 hours; subsequently, the reactor is cooled to ambient temperature. After opening the reaction oven, the nitrided powder is removed, which already contains the pure CeO_{2-x-y}Nₓ product and exhibits an X-ray diffractogram as that shown in Figure 2.

The composition may be determined by means of different techniques, such as elementary analysis, to determine the content of nitrogen x, and magnetic susceptibility measurements as a function of temperature in order to determine the percentage of cerium 3+, and, indirectly, stoichiometric coefficient y. From the elementary analysis, by the combustion of a small portion of the sample, a nitrogen percentage of 0.36% by weight is obtained (x=0.04). A second portion of the sample is introduced into a magnetometer to obtain the magnetic susceptibility curve as a function of temperature, in order to determine the percentage of cerium 3+. The product is paramagnetic and contains 2% molar cerium 3+, which makes it possible to formulate the compound as CeO_{1.93}N_{0.04}.

## Claims

1. Ce-N-O system resulting from the nitrogen doping of ceria, with the general formula CeO_{2-x-y}Nₓ, **characterised in that** x and y are such that: 0<x<0.5 and 0<y<0.5.

2. Ce-N-O system resulting from the nitrogen doping of ceria, with the general formula CeO_{2-x-y}Nₓ, as claimed in claim 1, **characterised in that** it has a fluorite-type crystalline structure, where cerium is located in the Ca-type crystallographic positions, and nitrogen and oxygen are in the F-type positions.

3. Ce-N-O system resulting from the nitrogen doping of ceria, with the general formula CeO_{2-x-y}Nₓ, as claimed in claim 1, **characterised in that** it has a paramagnetic character.

4. Method of obtaining the product with the general formula Ce0_{2-x-y}Nₓ, as claimed in claims 1 to 3, **characterised in that** it is obtained from ceria in an ammonia atmosphere at temperatures above 400°C.

5. Use of the product with the general formula CeO_{2-x-y}Nₓ as a catalyst.

6. Use of the product with the general formula CeO_{2-x-y}Nₓ as an ionic conductor.

7. Use of the product with the general formula CeO_{2-x-y}Nₓ as a luminescent material.
